# EUROPEAN PATENT APPLICATION

(11) **EP 2 690 320 A2**
(43) Date of publication of application: **29.01.2014**
(21) Application number: 13177229.5
(22) Date of filing: 19.07.2013
(51) Int. Cl.: F16H 61/04, F16H 1/20

(54) **Vehicle drive system**

(30) Priority: 24.07.2012 JP 2012164201
(71) Applicant: AISIN SEIKI KABUSHIKI KAISHA, Kariya-shi, Aichi 448-8650 (JP)
(72) Inventor: Mori, Kyosuke, Kariya-shi, Aichi 448-8650 (JP); Misu, Takahiro, Kariya-shi, Aichi 448-8650 (JP); Iwasaki, Yasuhisa, Kariya-shi, Aichi 448-8650 (JP); Harada, Shinya, Kariya-shi, Aichi 448-8650 (JP)
(74) Representative: Kramer - Barske - Schmidtchen

(57) **Abstract**

A vehicle drive system (100) includes: an engine (EG) outputting a rotational torque; a drive shaft (EG-1); a dog-clutch automatic transmission (TM) which includes an input shaft (31), an output shaft (32), plural idler gears (43, 44, 45, 51, 52) idly rotatably arranged at one of the input shaft (31) and the output shaft (32), plural fixed gears (41, 42, 53, 54, 55) fixed to the other of the input shaft (31) and the output shaft (32) and engageable with the idler gears (43, 44, 45, 51, 52), respectively, plural dog clutches (61 a, 62a, 63a) provided at a shaft (31, 32) at which the idler gears (43, 44, 45, 51, 52) are arranged, and a selection mechanism (61, 62, 63) moving each dog clutch (61 a, 62a, 63a) in an axial direction of the shaft to allow the dog clutch (61 a, 62a, 63a) to be engaged with the idler gear (43, 44, 45, 51, 52) and to allow the dog clutch (61 a, 62a, 63a) to be disengaged from the idler gear (43, 44, 45, 51, 52); a clutch (2) arranged between the drive shaft (EG-1) and the input shaft (31); and a shift execution device (13) configured to execute an up-shift operation from a present gear stage to a subsequent gear stage.

## Description

### TECHNICAL FIELD

This disclosure generally relates to a vehicle drive system.

### BACKGROUND DISCUSSION

A known vehicle drive system disclosed, for example, in JP2002-139146A (which will be hereinafter referred to as Reference 1) is a shift control device basically configured as a manual transmission and performing a shift operation by an actuator. Such shift control device is provided with a synchronizer ring for rotating an idler gear of a subsequent gear stage in synchronization with a shaft to which the idler gear is to be rotatably connected.

JP2009-293675A (which will be hereinafter referred to as Reference 2) discloses a vehicle drive system applied to a hybrid vehicle which is provided with a motor generator. According to a technique in the vehicle drive system of Reference 2, at the time of execution of a shift operation, an idle gear of a subsequent gear stage is rotated by means of a motor generator in synchronization with a shaft to which the idler gear is to be rotatably connected.

In the vehicle drive system configured to be provided with the synchronizer ring as described in Reference 1, at the time of execution of the shift operation, the actuator presses the synchronizer ring to a cone formed at the idler gear; therefore, a frictional force generated between the synchronizer ring and the cone is utilized to thereby rotate the idler gear in synchronization with the shaft to which the idler gear is to be rotatably connected. Thus, the high-powered shift actuator is needed, resulting in cost and weight increases. In addition, a sliding resistance is consistently generated between the synchronizer ring and the cone while a vehicle is moving. As a result, a mechanical loss may be generated.

According to the technique disclosed in Reference 2, at the time of execution of the shift operation, the motor generator is utilized to rotate the idler gear of the subsequent gear stage in synchronization with the shaft to which the idler gear is to be rotatably connected. During a period in which the idler gear rotates in synchronization with the shaft, rotational torque of the motor generator is not transmitted to driving wheels. Therefore, a driver of the vehicle feels deceleration of the vehicle and thus the driving performance of the vehicle may deteriorate. In such case, in addition to the actuator for driving the vehicle, it is recommended to provide a motor generator specific for rotating the idler gear of the subsequent gear stage in synchronization with the shaft to which the idler gear is to be rotatably connected; thereby, the deterioration of the driving performance of the vehicle may be restricted. However, cost and weight increase because of the addition of the motor generator specific for rotating the idler gear in synchronization with the shaft to which the idler gear is to be rotatably connected.

A need thus exists for a vehicle drive system that may restrict a mechanical loss without cost or weight increase.

### SUMMARY

According to an aspect of this disclosure, a vehicle drive system includes: an engine outputting a rotational torque; a drive shaft to which the rotational torque of the engine is transmitted; a dog-clutch automatic transmission which includes an input shaft, an output shaft arranged in parallel with the input shaft and rotatably connecting to a driving wheel, plural idler gears idly rotatably arranged at one of the input shaft and the output shaft, plural fixed gears fixed to the other of the input shaft and the output shaft so as not to rotate relative to the other of the input shaft and the output shaft, the plural fixed gears being engageable with the plural idler gears, respectively, plural dog clutches provided at a shaft at which the plural idler gears are arranged, and positioned side by side with the plural idler gears so as not to rotate relative to the shaft and so as to move in an axial direction of the shaft, each of the plural dog clutches being engaged with each of the plural idler gears in a non relatively rotatable state to connect the idler gear to the shaft so that the idler gear is not relatively rotatable to the shaft, and a selection mechanism moving the dog clutch in the axial direction to allow the dog clutch to be engaged with the corresponding idler gear in a non relatively rotatable state, the selection mechanism moving the dog clutch in the axial direction to allow the dog clutch to be disengaged from the corresponding idler gear in a relatively rotatable state; a clutch arranged between the drive shaft and the input shaft to connect and disconnect between the drive shaft and the input shaft; and a shift execution device configured to execute an up-shift operation from a present gear stage to a subsequent gear stage by reducing the rotational torque of the engine, driving the selection mechanism to disengage the dog clutch, which is engaged with the idler gear of the present gear stage, from the idler gear of the present gear stage, and disengaging the clutch after a predetermined time has elapsed, and by driving the selection mechanism to engage the dog clutch, which is to be engaged with the idler gear of the subsequent gear stage, with the idler gear of the subsequent gear stage, to connect the idler gear of the subsequent gear stage to the shaft so that the idler gear of the subsequent gear stage rotates along with the shaft at which the idler gear of the subsequent gear stage is arranged, and engaging the clutch.

According to the vehicle drive system of the disclosure, in a case of executing the up-shift operation from the present gear stage to the subsequent gear stage, the shift execution device reduces the rotational torque of the engine and drives the selection mechanism to disengage the dog clutch, which is engaged with the idler gear of the present gear stage, from the idler gear. In other words, the rotational torque of the engine is reduced; thereby, an axial friction resistance between the idler gear and the dog clutch or an axial friction resistance between the dog clutch and the shaft at which the dog clutch is arranged. As a result, the dog clutch may be moved in the axial direction relative to the shaft at which the dog clutch is arranged. In such condition where the dog clutch is movable in the axial direction relative to the shaft, the dog clutch is disengaged from the idler gear, thereby bringing the dog-clutch automatic transmission into a neutral state. Thus, it is not necessary to bring the dog-clutch automatic transmission into the neutral state after the clutch is disengaged. Therefore, time for bringing the dog-clutch automatic transmission into the neutral state may be reduced by time for disengaging the clutch. As a result, time for executing the up-shift operation may be reduced.

Additionally, according to the vehicle drive system of the disclosure, the dog clutch is disengaged from the idler gear without disengaging the clutch; therefore, the shift execution device may reduce a rotational speed of the input shaft by reducing the rotational torque of the engine so that a rotational speed of the engine decreases. Consequently, a difference of a rotational speed of the idler gear of the subsequent gear stage and a rotational speed of the dog clutch corresponding to the idler gear of the subsequent gear stage may be reduced. As a result, the idler gear and the dog clutch are engaged with each other; thereby, the up-shift operation may be executed. In addition, a synchronization mechanism may be omitted in the vehicle drive system. Thus, a mechanical loss caused by a sliding movement of the synchronization mechanism may be reduced. In addition, a high-power shift actuator for actuating the synchronization mechanism is not needed, resulting in a cost reduction of the vehicle drive system and further leading to a weight reduction thereof. Thus, the vehicle drive system that may restrict the mechanical loss is obtained without cost or weight increase.

According to another aspect of the disclosure, the vehicle drive system further includes a motor rotatably connecting to the drive shaft to output a rotational torque to the driving wheel. In a case of executing the up-shift operation from the present gear stage to the subsequent gear stage, the shift execution device increases the rotational torque of the motor when reducing the rotational torque of the engine.

According to the vehicle drive system of the disclosure, in a case of executing the up-shift operation, the shift execution device increases the rotational torque of the motor when reducing the rotational torque of the engine. As a result, a vehicle may be avoided or restricted from decelerating because of the reduction of the rotational torque of the engine and deterioration of the operationability of the vehicle drive system may be avoided.

According to still another aspect of the disclosure, in a case where a rotational speed of the input shaft is decreased to a synchronizing rotational speed after the clutch is disengaged, the shift execution device drives the selection mechanism to connect the idler gear of the subsequent gear stage to the shaft so that the idler gear of the subsequent gear stage rotates along with the shaft. The synchronizing rotational speed corresponds to the rotational speed of the input shaft in a state where a difference between a rotational speed of the idler gear of the subsequent gear stage and a rotational speed of the shaft at which the idler gear of the subsequent gear stage is arranged, is within a rotational speed tolerance including a predetermine range.

According to the vehicle drive system of the disclosure, when the rotational speed of the input shaft is reduced to the synchronizing rotational speed after the clutch is disengaged, the shift execution device drives the selection mechanism to thereby connect the idler gear of the subsequent gear stage to the shaft so that the idler gear rotates with the shaft. The synchronizing rotational speed corresponds to the rotational speed of the input shaft in a state where the difference between the rotational speed of the idler gear of the subsequent gear stage and the rotational speed of the shaft at which the idler gear of the subsequent gear stage is arranged, is within the rotational speed tolerance having the predetermine range. The idler gear of the subsequent gear stage is connected to the shaft so as to rotate therewith as described above; therefore, the idler gear of the subsequent gear stage is engaged with the corresponding dog clutch in a manner to be substantially synchronized with the dog clutch (in a state where a phase difference is slightly generated between the idler gear of the subsequent gear stage and the corresponding dog clutch). Accordingly, the idler gear of the subsequent gear stage may be surely rotatably connected to the shaft at which the idler gear of the subsequent gear stage is arranged. Consequently, the up-shift operation may be surely executed. In addition, when the idler gear is engaged with the corresponding dog clutch, a shock is generated due to the difference between the rotational speeds of the idler gear and the corresponding dog clutch; however, such shock may be reduced in the vehicle drive system. As a result, a shift shock or abnormal noises generated at the vehicle drive system by the up-shift operation may be reduced.

According to a further aspect of the disclosure, after the shift execution device disconnects the idler gear of the present gear stage from the shaft at which the idler gear of the present gear stage is arranged, the shift execution device reduces a transmissible torque of the clutch to a reference transmissible torque which is smaller than a torque value in a fully engaged state of the clutch and which is greater than zero. Further, in a case where the rotational speed of the input shaft is decreased to a reference rotational speed which is greater by a predetermined rotational speed than the synchronizing rotational speed, the shift execution device disengages the clutch.

According to the vehicle drive system of the disclosure, the shift execution device disconnects the idler gear of the present gear stage from the shaft at which the idler gear of the present gear stage is arranged. Afterward, the shift execution device reduces the transmissible torque of the clutch to the reference transmissible torque which is smaller than the torque value in the fully engaged state of the clutch and which is greater than zero. In such case, time for disengaging the clutch may be short compared to that of a case where the clutch is disengaged from the fully engaged state. Accordingly, in a case where the idler gear of the subsequent gear stage is rotationally connected to the shaft at which the idler gear of the subsequent gear stage is arranged, the rotational speed of the input shaft is restricted from being reduced to be significantly below the synchronizing rotational speed. Consequently, the idler gear of the subsequent gear stage may be surely rotatably connected to the shaft at which the idler gear of the subsequent gear stage is arranged. In addition, when the idler gear is engaged with the corresponding dog clutch, a shock is generated due to the difference between the rotational speeds of the idler gear and the corresponding dog clutch; however, such shock may be minimized in the vehicle drive system. As a result, a shift shock or abnormal noises generated at the vehicle drive system by the up-shift operation may be reduced.

According to another aspect of the disclosure, the shift execution device reduces the rotational torque of the engine by cutting fuel to the engine.

According to the vehicle drive system of the disclosure, the shift execution device reduces the rotational torque of the engine by cutting the fuel to the engine. Therefore, the rotational torque of the engine may be promptly reduced by a friction torque acting in a negative direction. Accordingly, the dog clutch may be promptly brought into a state of being movable in the axial direction of the shaft at which the dog clutch is arranged and may be quickly disengaged from the idler gear. In addition, the rotational speed of the input shaft is promptly reduced; thereby, the idler gear of the subsequent gear stage may be synchronized with the dog clutch corresponding to the idler gear of the subsequent gear. As a result, a state where an up-shift operation is executable may be obtained and time for the up-shift operation may be reduced.

According to still another aspect of the disclosure, a vehicle drive system includes: a dog-clutch automatic transmission which includes an input shaft to which a rotational torque from an engine is transmitted via a drive shaft, an output shaft rotatably connecting to a driving wheel, an idler gear idly rotatably arranged at one of the input shaft and the output shaft, a fixed gear arranged at the other of the input shaft and the output shaft and provided to be engageable with the idler gear, a dog clutch being moved to allow the idler gear and the fixed gear to be engaged and disengaged with respect to each other, and a selection mechanism moving the dog clutch to shift gear stages; a clutch arranged between the drive shaft and the input shaft to connect and disconnect between the drive shaft and the input shaft; and a shift execution device configured to execute a down-shift operation from a present gear stage to a subsequent gear stage by reducing the rotational torque of the engine, driving the selection mechanism to allow the dog clutch to be disengaged from the idler gear of the present gear stage, and disengaging the clutch, and by driving the selection mechanism to move the dog clutch to allow the dog clutch to be engaged with the idler gear of the subsequent gear stage, and engaging the clutch.

According to a further aspect of the disclosure, the vehicle drive system further includes a motor rotatably connecting to the drive shaft to output a rotational torque to the driving wheel. In a case of executing the down-shift operation from the present gear stage to the subsequent gear stage, the shift execution device reduces the rotational torque of the engine and increases the rotational torque of the motor, and disengages the clutch after bringing the clutch into a half-engaged state.

According to another aspect of the disclosure, after the shift execution device brings the dog clutch into a neutral state, the shift execution device increases a transmissible torque of the clutch, and starts an engine rotational speed control when an actual transmissible torque has reached a reference value.

According to still another aspect of the disclosure, the vehicle drive system further includes an input shaft rotational speed sensor for detecting a rotational speed of the input shaft. In a case where the rotational speed of the input shaft has reached a reference rotational speed, the shift execution device ends the engine rotational speed control and drives the selection mechanism to move the dog clutch to start downshifting.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is an explanatory drawing illustrating a vehicle in which a vehicle drive system according to an embodiment disclosed here is mounted;

Fig. 2 is a flowchart of a shift control routine as a control program to be executed by a transmission ECU of Fig. 1;

Fig. 3 is a flowchart of a shift control routine as a control program to be executed by the transmission ECU of Fig. 1;

Fig. 4 is a timeline chart showing a relation between a course of time and a rotational speed of a motor generator, a rotational speed of an input shaft, a rotational speed of an engine, a transmissible torque of a clutch, a rotational torque of the engine, a rotational torque of the motor generator, a required gear stage, an actual gear stage, states of the engine, and states of the clutch during an up-shift operation; and

Fig. 5 is a timeline chart showing a relation between a course of time and a rotational speed of the motor generator, a rotational speed of the input shaft, a rotational speed of the engine, a transmissible torque of the clutch, a rotational torque of the engine, a rotational torque of the motor generator, a required gear stage, an actual gear stage, states of the engine, and states of the clutch during a down-shift operation.

### DETAILED DESCRIPTION

An embodiment of this disclosure will be described as follows with reference to the attached drawings. A hybrid vehicle (which will be hereinafter simply referred to as a vehicle) in which a vehicle drive system 100 according to the embodiment is mounted is a vehicle in which driving wheels Wl, Wr are driven by a rotational torque outputted from an engine EG and a rotational torque outputted from a motor generator MG.

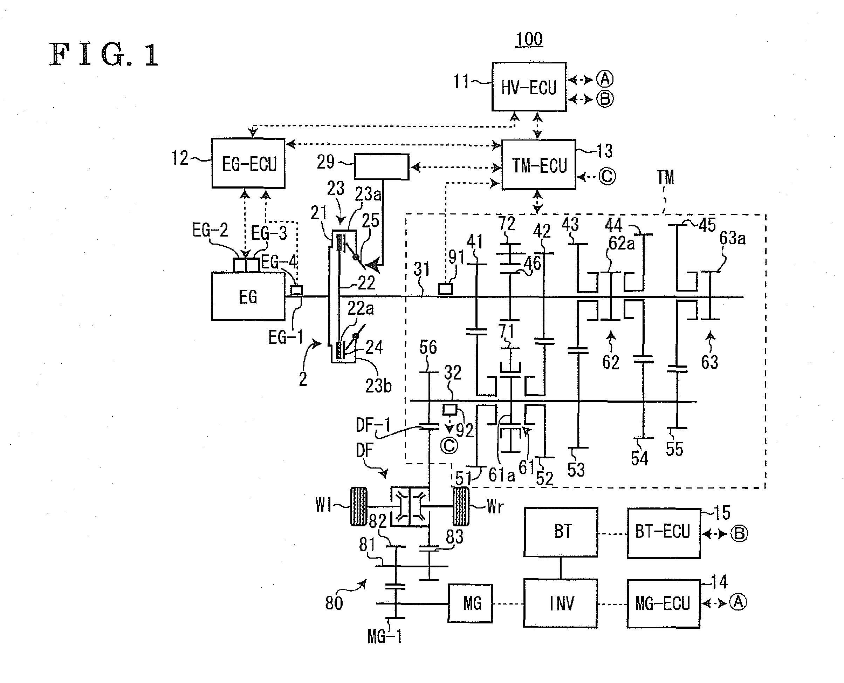

As illustrated in Fig. 1, the vehicle drive system 100 includes the engine EG, the motor generator MG, a clutch 2, a transmission TM, an inverter INV, a battery BT, a hybrid ECU 11 (indicated as HV-ECU), an engine ECU 12 (indicated as EG-ECU), a transmission ECU 13 (indicated as TM-ECU) serving as a shift execution device, a motor generator ECU 14 (indicated as MG-ECU), a battery ECU 15 (indicated as BT-ECU), and a speed reducer 80. In the embodiment, the HV-ECU 11 and the TM-ECU 13 are described as separate members. Alternatively, the HV-ECU 11 and the TM-ECU 13 may be an integrated member.

The engine EG is, for example, a gasoline engine, a diesel engine, or the like which utilizes hydrocarbon fuel, for example, gasoline or light oil. The engine EG outputs the rotational torque. The rotational torque outputted from the engine EG is transmitted to a drive shaft EG-1. The engine EG includes a fuel injection device EG-2 and a throttle valve EG-3. The fuel injection device EG-2 and the throttle valve EG-3 are connected to the EG-ECU 12 so as to communicate therewith, thereby being controlled by the EG-ECU 12. An engine rotational speed sensor EG-4 (which will be hereinafter referred to as an EG rotational speed sensor) is provided adjacent to the drive shaft EG-1. The EG rotational speed sensor EG-4 detects a rotational speed of the drive shaft EG-1, i.e., a rotational speed of the engine EG. The EG rotational sensor EG-4 is connected to the EG-ECU 12 so as to communicate therewith and outputs a detected result of the rotational speed of the engine EG to the EG-ECU 12.

The clutch 2 is arranged between the drive shaft EG-1 and an input shaft 31 of the transmission TM. The clutch 2 is configured to connect and disconnect between the drive shaft EG-1 and the input shaft 31 and is an arbitrary clutch which may electrically control the torque being transmitted between the drive shaft EG-1 and the input shaft 31. In the embodiment, the clutch 2 is a single dry clutch which is normally closed. The clutch 2 includes a flywheel 21, a clutch disc 22, a clutch cover 23, a pressure plate 24, and a diaphragm spring 25. The flywheel 21 is formed in an annular plate having a predetermined mass. The flywheel 21 to which the drive shaft EG-1 is connected integrally rotates with the drive shaft EG-1. The clutch disc 22 is formed in an annular plate and a friction member 22a is provided at a radially outward edge portion of the clutch disc 22. The clutch disc 22 faces the flywheel 21 so as to come close to and separate from the flywheel 21. The clutch disc 22 is connected to the input shaft 31 so as to integrally rotate therewith.

The clutch cover 23 is configured by a cylindrical portion 23a connected to a radially outward edge of the flywheel 21 and arranged at a radially outward side of the clutch disc 22, and a side circumferential wall 23b extending radially inward from an end potion of the cylindrical portion 23a. The end portion of the cylindrical portion 23a is at an opposite side of a connected portion of the cylindrical portion 23a to the flywheel 21 as seen from the engine EG. The clutch disc 22 includes a first surface facing the flywheel 21 and a second surface opposite of the first surface from the flywheel 21. The pressure plate 24 formed in an annular flat plate is provided to face the second surface of the clutch disc 22 so as to come close to and separate from the second surface.

The diaphragm spring 25 is a so-called disc spring. A diaphragm is formed at the diaphragm spring 25 so as to be inclined in a thickness direction thereof. An intermediate portion of the diaphragm spring 25 in a radial direction thereof is in contact with a radially inward end of the side circumferential wall 23b of the clutch cover 23 while a radially outward end of the diaphragm spring 25 is in contact with the pressure plate 24. The diaphragm spring 25 presses the clutch disc 22 via the pressure plate 24 to the flywheel 21. In a condition where the diaphragm spring 25 presses the clutch disc 22 via the pressure plate 24 to the flywheel 21, the friction member 22a of the clutch disc 22 is pressed by the flywheel 21 and the pressure plate 24; therefore, the clutch disc 22 and the flywheel 21 integrally rotate with each other by a frictional force between the friction member 22a and the flywheel 21 and by a frictional force between the friction member 22a and the pressure plate 24. As a result, the drive shaft EG-1 is connected to the input shaft 31.

A clutch actuator 29 is provided at the vehicle drive system 100. Driving of the clutch actuator 29 is controlled by the TM-ECU 13; thereby, a radially inward end portion of the diaphragm spring 25 is pressed toward the flywheel 21 or is released from the pressed condition thereof. Therefore, a transmissible torque of the clutch 2 is varied. The clutch actuator 29 is, for example, an electric clutch actuator or a hydraulic clutch actuator. The clutch actuator 29 presses the radially inward end portion of the diaphragm spring 25 toward the flywheel 21; therefore, the diaphragm spring 25 is deformed in a manner that the radially outward end thereof is shifted in a direction to separate from the flywheel 21. In accordance with the deformation of the diaphragm spring 25, a pressing force by which the flywheel 21 and the pressure plate 24 press the clutch disc 22 gradually decreases and the transmissible torque between the clutch disc 22 and the flywheel 21 also gradually decreases; therefore, the drive shaft EG-1 is disconnected from the input shaft 31. As described above, the TM-ECU 13 drives the clutch actuator 29 to arbitrarily vary the transmissible torque between the clutch disc 22 and the flywheel 21.

The transmission TM is an automatic transmission which is configured by a gear mechanism to change the rotational torque from the engine EG by gear ratios of plural gear stages to output the rotational torque to a differential mechanism DF. In particular, the transmission TM of the embodiment serves as a dog-clutch automatic transmission which is provided with first, second, and third dog clutches 61a, 62a, and 63a and which is not provided with a synchronization mechanism, for example, a synchronizer ring. The transmission TM includes the input shaft 31, an output shaft 32, a first drive gear 41, a second drive gear 42, a third drive gear 43, a fourth drive gear 44, a fifth drive gear 45, a reverse drive gear 46, a first driven gear 51, a second driven gear 52, a third driven gear 53, a fourth driven gear 54, a fifth driven gear 55, an output gear 56, a first selection mechanism 61, a second selection mechanism 62, a third selection mechanism 63, a reverse driven gear 71, and a reverse idler gear 72.

The input shaft 31 is a shaft to which the rotational torque from the engine EG is inputted. The input shaft 31 integrally rotates with the clutch disc 22 of the clutch 2. The output shaft 32 is arranged in parallel with the input shaft 31. The input shaft 31 and the output shaft 32 are housed in a housing of the transmission TM and are rotatably supported by the housing.

The first drive gear 41, the second drive gear 42, and the reverse drive gear 46 are fixed gears which are fixed to the input shaft 31 so as not to rotate relative thereto. The third drive gear 43, the fourth drive gear 44, and the fifth drive gear 45 are idler gears which are provided at the input shaft 31 so as to idly rotate relative to the input shaft 31.

The first driven gear 51 and the second driven gear 52 are idler gears which are provided at the output shaft 32 so as to idly rotate relative to the output shaft 32. The third driven gear 53, the fourth driven gear 54, the fifth driven gear 55, and the output gear 56 are fixed gears which are fixed to the output shaft 32 so as not to rotate relative thereto.

The first drive gear 41 and the first driven gear 51 engage with each other to configure a first gear stage. The second drive gear 42 and the second driven gear 52 engage with each other to configure a second gear stage. The third drive gear 43 and the third driven gear 53 engage with each other to configure a third gear stage. The fourth drive gear 44 and the fourth driven gear 54 engage with each other to configure a fourth gear stage. The fifth drive gear 45 and the fifth driven gear 55 engage with each other to configure a fifth gear stage.

Gear diameters of the first drive gear 41, the second drive gear 42, the third drive gear 43, the fourth drive gear 44, and the fifth drive gear 45 are designed to gradually increase in the mentioned order. Gear diameters of the first driven gear 51, the second driven gear 52, the third driven gear 53, the fourth driven gear 54, and the fifth driven gear 55 are designed to gradually decrease in the mentioned order.

An input shaft rotational speed sensor 91 for detecting a rotational speed of the input shaft 31 is provided adjacent to the input shaft 31 or adjacent to the first drive gear 41 or the second drive gear 42. An output shaft rotational speed sensor 92 for detecting a rotational speed of the output shaft 32 is provided adjacent to the output shaft 32 or adjacent to the third driven gear 53, the fourth driven gear 54, or the fifth driven gear 55. The input shaft rotational speed sensor 91 and the output shaft rotational speed sensor 92 are connected to the TM-ECU 13 so as to communicate therewith and output detection signals to the TM-ECU 13.

When the reverse drive gear 46 is engaged with the reverse idler gear 72, the reverse drive gear 46 drives the reverse driven gear 71 via the reverse idler gear 72 to thereby move the vehicle in a reverse direction. The reverse drive gear 46 meshes with the reverse idler gear 72 so as to be connected thereto and disconnected therefrom.

The output shaft 32 outputs the rotational torque inputted to the transmission TM, to the differential mechanism DF. When the output gear 56 is engaged with a ring gear DF-1 of the differential mechanism DF, the rotational torque inputted to the output shaft 32, is outputted via the output gear 56 to the differential mechanism DF.

The first selection mechanism 61 selects the first driven gear 51 or the second driven gear 52 to connect the first driven gear 51 or the second driven gear 52 to the output shaft 32 in a manner that the first driven gear 51 or the second driven gear 52 may not rotate relative to the output shaft 32. The first selection mechanism 61 includes the first dog clutch 61a and a first shift actuator for driving the first dog clutch 61a. The first selection mechanism 61 is arranged between the first driven gear 51 and the second driven gear 52. In other words, the first dog clutch 61a is arranged between the first driven gear 51 and the second driven gear 52 so as to be positioned side by side with the first driven gear 51 and the second driven gear 52. The first dog clutch 61a is spline-fitted to the output shaft 32 so as not to rotate relative thereto and so as to move along an axial direction of the output shaft 32. Plural engagement portions are formed at each of side surfaces of the first dog clutch 61a so as to be provided circumferentially at predetermined angular intervals. The engagement portions of the first dog clutch 61a engage with or disengage from engaged portions formed at a facing surface of the first driven gear 51, which faces the first dog clutch 61a. The engagement portions of the first dog clutch 61a engage with or disengage from engaged portions formed at a facing surface of the second driven gear 52, which faces the first dog clutch 61a.

The first shift actuator is driven by the TM-ECU 13 to thereby move the first dog clutch 61a toward the first driven gear 51 or the second driven gear 52. In addition, the first shift actuator is driven by the TM-ECU 13 to thereby move the first dog clutch 61a to a first neutral position which is located midway between the first driven gear 51 and the second driven gear 52. In a case where the first shift actuator moves the first dog clutch 61a to the first driven gear 51, the engagement portions of the first dog clutch 61a are engaged with the engaged portions of the first driven gear 51. As a result, the first driven gear 51 is connected via the first dog clutch 61a to the output shaft 32 so as not to rotate relative thereto, thereby configuring the first gear stage. In a case where the first shift actuator moves the first dog clutch 61a to the second driven gear 52, the engagement portions of the first dog clutch 61a are engaged with the engaged portions of the second driven gear 52. As a result, the second driven gear 52 is connected via the first dog clutch 61a to the output shaft 32 so as not to rotate relative thereto, thereby configuring the second gear stage. In a case where the first shift actuator moves the first dog clutch 61a to the first neutral position, both the first driven gear 51 and the second driven gear 52 are brought in a neutral state where the first driven gear 51 and the second driven gear 52 are rotatable relative to the output shaft 32.

The second selection mechanism 62 selects the third drive gear 43 or the fourth drive gear 44 to connect the third drive gear 43 or the fourth drive gear 44 to the input shaft 31 in a manner that the third drive gear 43 or the fourth drive gear 44 may not rotate relative to the input shaft 31. The second selection mechanism 62 includes the second dog clutch 62a and a second shift actuator for driving the second dog clutch 62a. The second selection mechanism 62 is arranged between the third drive gear 43 and the fourth drive gear 44. In other words, the second dog clutch 62a is arranged between the third drive gear 43 and the fourth drive gear 44 so as to be positioned side by side with the third drive gear 43 and the fourth drive gear 44. The second dog clutch 62a is spline-fitted to the input shaft 31 so as not to rotate relative thereto and so as to move along an axial direction of the input shaft 31. Plural engagement portions are formed at each of side surfaces of the second dog clutch 62a so as to be provided circumferentially at predetermined angular intervals. The engagement portions of the second dog clutch 62a engage with or disengage from engaged portions formed at a facing surface of the third drive gear 43, which faces the second dog clutch 62a. The engagement portions of the second dog clutch 62a engage with or disengage from engaged portions formed at a facing surface of the fourth drive gear 44, which faces the second dog clutch 62a.

The second shift actuator is driven by the TM-ECU 13 to thereby move the second dog clutch 62a toward the third drive gear 43 or the fourth drive gear 44. In addition, the second shift actuator is driven by the TM-ECU 13 to thereby move the second dog clutch 62a to a second neutral position which is located midway between the third drive gear 43 and the fourth drive gear 44. In a case where the second actuator moves the second dog clutch 62a to the third drive gear 43, the engagement portions of the second dog clutch 62a are engaged with the engaged portions of the third drive gear 43. As a result, the third drive gear 43 is connected via the second dog clutch 62a to the input shaft 31 so as not to rotate relative thereto, thereby configuring the third gear stage. In a case where the second shift actuator moves the second dog clutch 62a to the fourth drive gear 44, the engagement portions of the second dog clutch 62a are engaged with the engaged portions of the fourth drive gear 44. As a result, the fourth drive gear 44 is connected via the second dog clutch 62a to the input shaft 31 so as not to rotate relative thereto, thereby configuring the fourth gear stage. In a case where the second shift actuator moves the second dog clutch 62a to the second neutral position, both the third drive gear 43 and the fourth drive gear 44 are brought in a neutral state where the third drive gear 43 and the fourth drive gear 44 are rotatable relative to the input shaft 31.

The third selection mechanism 63 includes the third dog clutch 63a and a third shift actuator for driving the third dog clutch 63a. The third selection mechanism 63 is arranged side by side with the fifth drive gear 45. In other words, the third dog clutch 63a is arranged side by side with the fifth drive gear 45. The third dog clutch 63a is spline-fitted to the input shaft 31 so as not to rotate relative thereto and so as to move along the axial direction of the input shaft 31. The third dog clutch 63a includes a side surface which faces the fifth drive gear 45. Plural engagement portions are formed at the side surface of the third dog clutch 63a so as to be provided circumferentially at predetermined angular intervals. The engagement portions of the third dog clutch 63a engage with or disengage from engaged portions formed at a facing surface of the fifth drive gear 45, which faces the third dog clutch 63a.

The third shift actuator is driven by the TM-ECU 13 to thereby move the third dog clutch 63a toward the fifth drive gear 45. In addition, the third shift actuator is driven by the TM-ECU 13 to thereby move the third dog clutch 63a to a third neutral position which is located away from the fifth drive gear 45. In a case where the third actuator moves the third dog clutch 63a to the fifth drive gear 45, the engagement portions of the third dog clutch 63a are engaged with the engaged portions of the fifth drive gear 45. As a result, the fifth drive gear 45 is connected via the third dog clutch 63a to the input shaft 31 so as not to rotate relative thereto, thereby configuring the fifth gear stage. In a case where the third shift actuator moves the third dog clutch 63a to the third neutral position, the fifth drive gear 45 is brought in a neutral state where the fifth drive gear 45 is rotatable relative to the input shaft 31.

The reverse idler gear 72 is housed in the housing and is rotatably and axially movably supported thereby. In a case where the vehicle is moved in the reverse direction, the reverse idler gear 72 is engaged with both the reverse drive gear 46 and the reverse driven gear 71. In a case other than the case where the vehicle is moved in the reverse direction, the reverse idler gear 72 is not engaged with both the reverse drive gear 46 and the reverse driven gear 71. The reverse idler gear 72 is axially moved by a reverse actuator which is controlled by the TM-ECU 13 to be driven.

The differential mechanism DF transmits the rotational torque inputted from at least one of the output shaft 32 of the transmission TM and the motor generator MG, to the driving wheels Wl and Wr to allow the driving wheels Wl and Wr to rotate at different speeds. The differential mechanism DF includes the ring gear DF-1 engageable with the output gear 56 and a drive gear 83. According to the configuration of the differential mechanism DF, the output shaft 32 rotatably connects to the driving wheels Wl and Wr.

The speed reducer 80 reduces the rotational torque of the motor generator MG to output the reduced rotational torque to the differential mechanism DF. The speed reducer 80 includes a rotary shaft 81, a driven gear 82, and the drive gear 83. The driven gear 82 and the drive gear 83 are attached to the rotary shaft 81. The rotary shaft 81 is housed in a housing and is rotatably supported thereby. The driven gear 82 is engageable with a drive gear MG-1 which is rotatably driven by the motor generator MG. A gear diameter of the driven gear 82 is greater than a gear diameter of the drive gear 83. The drive gear 83 is engageable with the ring gear DF-1 of the differential mechanism DF.

The motor generator MG function as a motor for applying the rotational torque to the driving wheels Wl and Wr and also serves as a power generator converting a motional energy of the vehicle into electricity. The motor generator MG is configured by a stator fixed to a case and by a rotor rotatably arranged at a radially inward side of the stator.

The inverter INV is electrically connected to the battery BT and the stator of the motor generator MG. In addition, the inverter INV is connected to the MG-ECU 14 so as to communicate therewith. The inverter INV boosts a direct current supplied from the battery BT, in accordance with a control signal from the MG-ECU 14, and converts the direct current into an alternating current, thereafter supplying the alternating current to the stator. Therefore, the rotational torque is generated by the motor generator MG and thus the motor generator MG functions as the motor. Further, in accordance with a control signal from the MG-ECU 14, the inverter INV allows the motor generator MG to function as the power generator. Thus, the motor generator MG as the power generator generates an alternating current, converts the alternating current into a direct current, and reduces voltage, thereby charging the battery BT.

The battery BT is a secondary battery which is chargeable. The battery BT is connected to the inverter INV. The battery BT is connected to the BT-ECU 15 so as to communicate therewith.

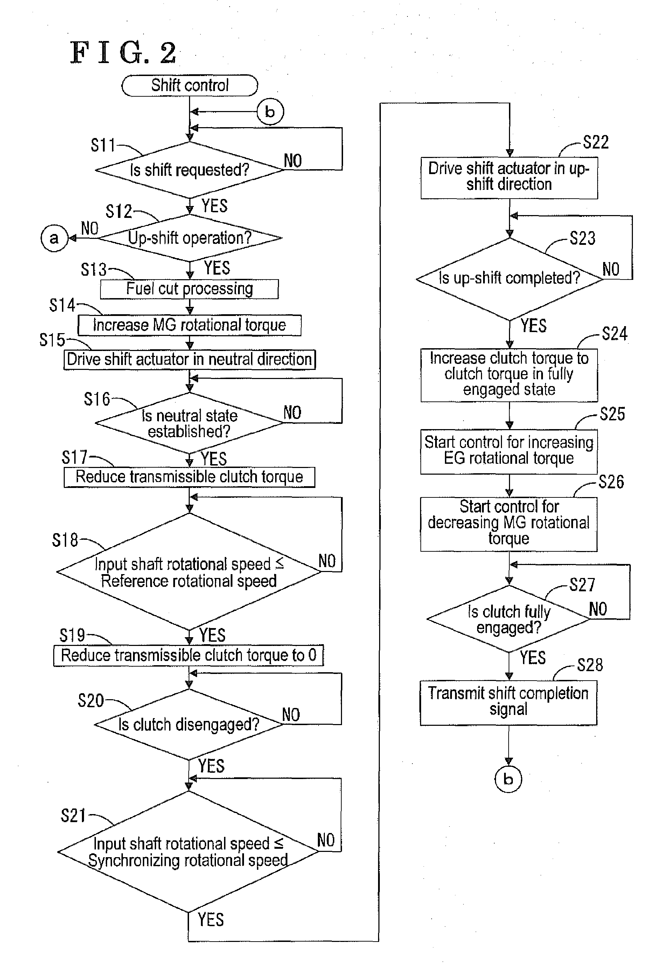

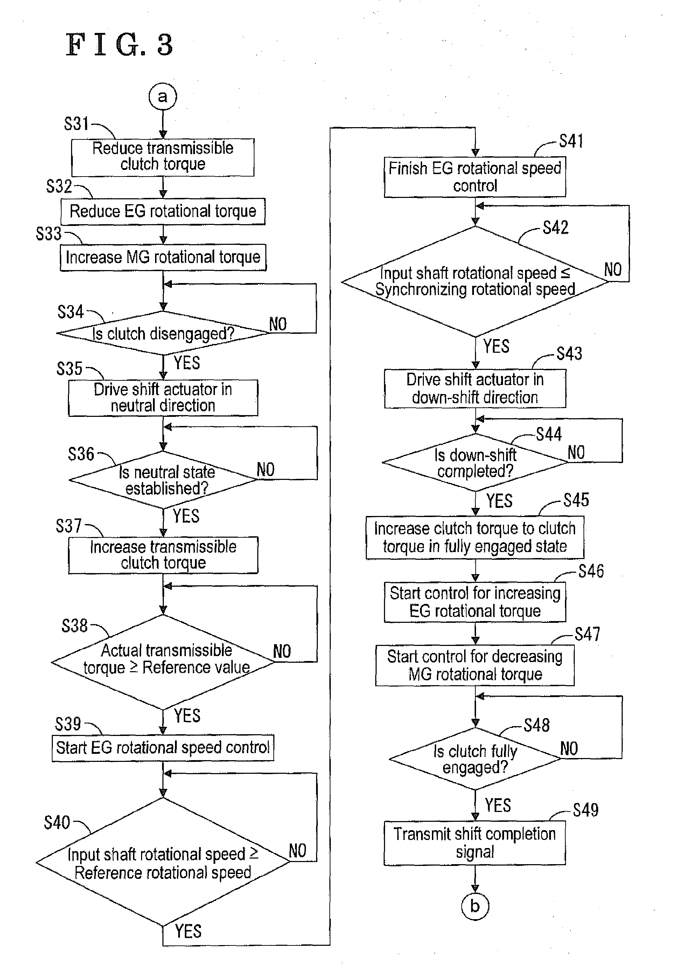

The EG-ECU 12 is an electric control unit to control the engine EG. The TM-ECU 13 is an electric control unit to control the transmission TM. The TM-ECU 13 is provided with a memory part, for example, an input/output interface, a CPU, a RAM, a ROM, and a non-volatile memory, and the like which are connected via buses to one another. The CPU performs control programs corresponding to flow charts illustrated in Figs. 2 and 3. The RAM temporarily stores variables required to perform the control programs. The memory portion stores the control programs.

The MG-ECU 14 is an electric control unit to control the inverter INV. The BT-ECU 15 is an electric control unit to control conditions, for example, charged and discharged conditions and temperature conditions, of the battery BT. The HV-ECU 11 is a superior electric control unit to overall control moving conditions of the vehicle. The HV-ECU 11, the EG-ECU 12, the TM-ECU 13, the MG-ECU 14, and the BT-ECU 15 may be communicated with one another via a CAN (Controller Area Network).

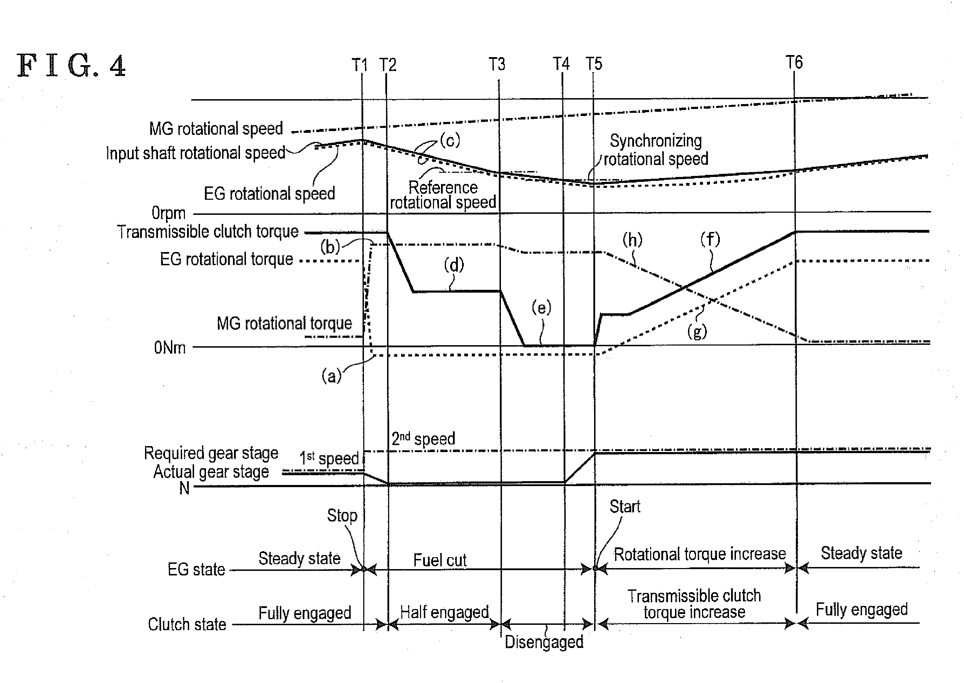

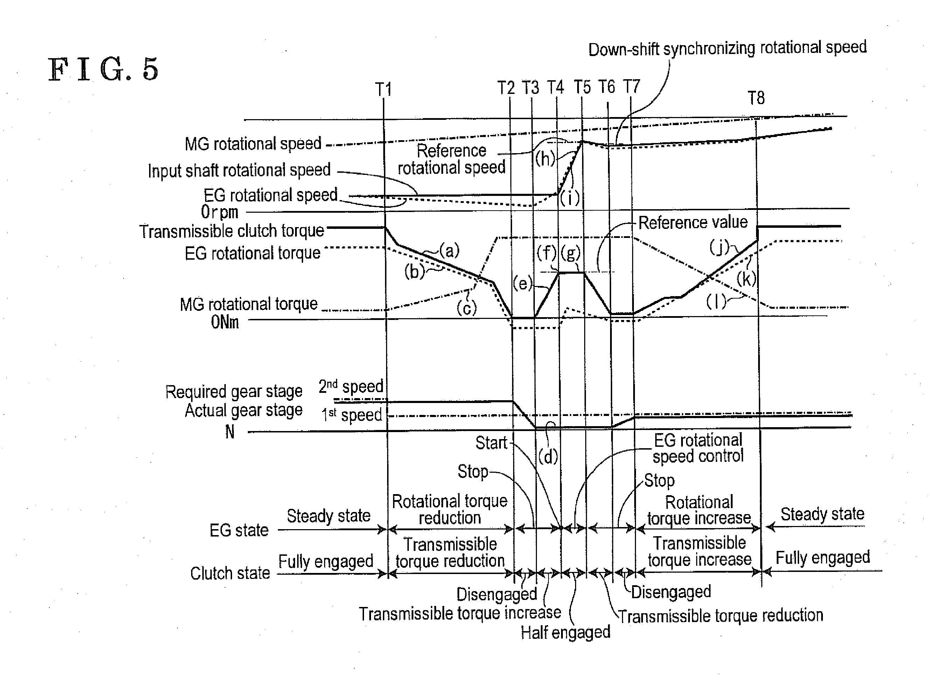

Next, shift processing routines (i.e., the control programs) to be executed by the TM-ECU 13 will be described as follows with reference to the flowcharts of Figs. 2 and 3 and timeline charts of Figs. 4 and 5. In a case where it is determined in step S11 that the TM-ECU 13 has received a shift request from the HV-ECU11 when the vehicle is brought in a movable condition (YES in step S11), the control program shifts from step S11 to step S12. In a case where it is determined in step S11 that the TM-ECU 13 has not received a shift request from the HV-ECU 11 (NO in step S11), a processing of step S11 is repeated. The HV-ECU 11 outputs the shift request to the TM-ECU 13 in a case where it is determined that a moving condition of the vehicle, which is configured by a throttle opening and a speed of the vehicle, has been beyond a shift line indicating a relation between the throttle opening and the speed or in a case where a driver of the vehicle operates a shift lever. Then, the TM-ECU 13 receives the shift request; thereafter, an authority for controlling the engine EG shifts from the HV-ECU 11 to the TM-ECU 13 and an authority for controlling the motor generator MG shifts from the MG-ECU 14 to the TM-ECU 13.

In a case where the shift request received by the TM-ECU 13 is determined as an up-shift operation in step S12 (YES in step S12, at time T1 in Fig. 4), the control program shifts from step S12 to step S13. In a case where the shift request received by the TM-ECU 13 is determined as a down-shift operation (NO in step S12, at time T1 in Fig. 5), the control program shifts from step S12 to step S31.

In step S13, the TM-ECU 13 outputs a control signal to the EG-ECU 12 to thereby stop fuel injection in the fuel injection device EG-2 to stop the engine EG. Additionally, in step S14, the TM-ECU 13 outputs a control signal to the MG-ECU 14 to thereby increase the rotational torque of the motor generator MG. Thereafter, the EG-ECU 12 stops and the rotational torque of the engine EG in a positive direction decreases; therefore, the rotational torque of the engine EG shifts from a positive value to a negative value as indicated by (a) of Fig. 4. At this time, the clutch 2 is in an engaged state; therefore, the rotational torque in a negative direction, corresponding to a friction torque of the engine EG, is inputted via the clutch 2 to the input shaft 31 (the rotational torque in the positive and negative directions will be hereinafter referred to as a positive rotational torque and a negative rotational torque, respectively). Consequently, as indicated by (c) of Fig. 4, the rotational speed of the engine EG and the rotational speed of the input shaft 31 decrease in accordance with the stopping of the engine EG. In addition, as indicated by (b) of Fig. 4, the rotational torque of the motor generator MG increases simultaneously when the positive rotational torque of the engine EG decreases. The rotational torque of the motor generator MG is controlled in consideration of acceleration and deceleration of the vehicle so as to compensate for the aforementioned decrease of the rotational torque of the engine EG, which is to be inputted to the ring gear DF-1 of the differential mechanism DF. After step S14 ends, the control program shifts from step S14 to step S15.

In step S15, the TM-ECU 13 drives the shift actuator of a presently established gear stage to move any one of the first, second, and third dog clutches 61a, 62a, and 63a of the presently established gear stage to the neutral position to bring all of the first, second, and third dog clutches 61a, 62a, and 63a into the neutral states, thereby bringing the transmission TM into a neutral state. In addition, the engine EG is stopped in step S13; therefore, the rotational torque of the engine EG is not excessively inputted to the input shaft 31 and the output shaft 32. Accordingly, an excessively large pressure is not applied between the engagement portions of each of the first, second, and third dog clutches 61a, 62a, and 63a and the engaged portions of each of the idler gears corresponding to the first, second, and third dog clutches 61a, 62a, and 63a. Thus, a friction resistance between the engagement portions and the engaged portions is small. Moreover, an excessively large pressure is not applied to contact portions between the input shaft 31 and the second and third dog clutches 62a and 63a spline-fitted to the input shaft 31, or is not applied to a contact portion between the output shaft 32 and the first dog clutch 61a spline-fitted to the output shaft 32. Accordingly, a friction resistance at each of the contact portions is small. Consequently, all of the first, second, and third dog clutches 61a, 62a, and 63a may move in the axial direction relative to the output shaft 32 or the input shaft 31. After step S15 ends, the control program shifts from step S15 to step S16. In the above processing, step S14 and step S15 may be executed at the same time or may be executed in reverse order from the order described above.

In a case where the TM-ECU 13 determines in step S16 on the basis of signals outputted from the shift actuators that all of the first, second, and third clutches 61a, 62a, and 63a are brought into the neutral states (YES in step S16, at time T2 in Fig. 4), the control program shifts from step S16 to step S17. In a case where the TM-ECU 13 determines in step S16 on the basis of signals outputted from the shift actuators that all of the first, second, and third clutches 61a, 62a, and 63a are not brought into the neutral states (NO in step S16), a processing of step S16 is repeated.

As indicated by (d) of Fig. 4, in step S17, the TM-ECU 13 controls the clutch 2 to be brought into a so-called half-engaged state by driving the clutch actuator 29 to reduce the transmissible torque of the clutch 2 to a reference transmissible torque. The reference transmissible torque is a torque value which is smaller than a torque value in a fully engaged state of the clutch 2 and which is greater than zero. Any of the idler gears are not rotatably connected to the input shaft 31 and the output shaft 32; therefore, a rotational moment is generated only at a component integrally rotating with the input shaft 31, i.e., a rotational moment is generated at the drive gears 41 and 42, the dog clutches 62a and 63a, the clutch disc 22, and the like which integrally rotate with the input shaft 31. Accordingly, for example, even in a case where the clutch 2 is in the half-engaged state, the drive shaft EG-1 and the input shaft 31 integrally rotate with each other while the clutch 2 scarcely slips. Thus, the rotational speed of the input shaft 31 is surely reduced as the rotational speed of the engine EG decreases. After step S17 ends, the control program shifts from step S17 to step S18.

In a case where the TM-ECU 13 determines in step S18 on the basis of a detection signal from the input shaft rotational speed sensor 91 that the rotational speed of the input shaft 31 is reduced to be smaller than a reference rotational speed (YES in step S18, at time T3), the control program shifts from step S18 to step S19. In a case where the TM-ECU 13 determines in step S18 that the rotational speed of the input shaft 31 is reduced but not below the reference rotational speed (NO in step S18), a processing of step S18 is repeated. The reference rotational speed is greater by a predetermined rotational speed than a synchronizing rotational speed which will be described below.

In step S19, the TM-ECU 13 drives the clutch actuator 29 to reduce the transmissible torque of the clutch 2 to zero as indicated by (e) of Fig. 4, thereby disengaging the clutch 2. After step S19 ends, the control program shifts from step S19 to step S20.

In a case where the TM-ECU 13 determines in step S20 on the basis of a detection signal from the clutch actuator 29 that the transmissible torque of the clutch 2 has reached zero and the clutch 2 is in a disengaged state (YES in step S20), the control program shifts from step S20 to step S21. In a case where the TM-ECU 13 determines in step S20 that the clutch 2 is not in the disengaged state (NO in step S20), a processing of step S20 is repeated.

In a case where the TM-ECU 13 determines in step S21 on the basis of a detection signal from the input shaft rotational speed sensor 91 that the rotational speed of the input shaft 31 is reduced to the synchronizing rotational speed (YES in step S21, at time T4 in Fig. 4), the control program shifts from step S21 to step S22. In a case where the TM-ECU 13 determines in step S21 that the rotational speed of the input shaft 31 is reduced but not below the synchronizing rotational speed (NO in step S21), a processing of step S21 is repeated.

The synchronizing rotational speed corresponds to the rotational speed of the input shaft 31 in a state where a difference between a rotational speed of each idler gear 43, 44, 45 of a subsequent gear stage and the rotational speed of the input shaft 31 to which each idler gear 43, 44, 45 is rotatably connected or a difference between a rotational speed of the idler gear 52 of a subsequent gear stage and the rotational speed of the output shaft 32 to which the idler gear 52 is rotatably connected, is within a rotational speed tolerance having a predetermine range. In particular, in the case of an up-shift operation to the second gear stage, the synchronizing rotational speed corresponds to the rotational speed of the input shaft 31 in a state where a difference between the rotational speeds of the second driven gear 52 and the output shaft 32 is within the rotational speed tolerance and the second driven gear 52 is rotating almost in synchronization with the output shaft 32. Further, in the case of an up-shift operation to each of the third, fourth, and fifth gear stages, the synchronizing rotational speed corresponds to the rotational speed of the input shaft 31 in a state where a difference between the rotational speed of each of the third, fourth, and fifth drive gears 43, 44, and 45 and the rotational speed of the input shaft 31 is within the rotational speed tolerance and each of the third, fourth, and fifth drive gears 43, 44, and 45 is rotating almost in synchronization with the input shaft 31.

For example, even in a condition where a difference is generated between the rotational speeds of the second driven gear 52 and the output shaft 32, the difference is within the rotational speed tolerance allowing the first dog clutch 61a to be engaged with the second driven gear 52. Likewise, for example, even in a condition where a difference is generated between the rotational speed of each of the third and fourth drive gears 43 and 44 and the rotational speed of the input shaft 31, the difference is within the rotational speed tolerance allowing the second dog clutch 62a to be engaged with each of the third and fourth drive gears 43 and 44. Further, likewise, for example, even in a condition where a difference is generated between the rotational speeds of the fifth drive gear 45 and the input shaft 31, the difference is within the rotational speed tolerance allowing the third dog clutch 63a to be engaged with the fifth drive gear 45. The synchronizing rotational speed is computed by the TM-ECU 13 on the basis of detection signals from the input shaft rotational speed sensor 91 and the output shaft rotational speed sensor 92.

In step S22, the TM-ECU 13 drives the shift actuator for the subsequent gear stage in the up-shift operation, to move any one of the first, second, and third dog clutches 61a, 62a, and 63a of the presently established gear stage, thereby starting the up-shift operation for establishing the subsequent gear stage. After step S22 ends, the control program shifts from step S22 to step S23.

In a case where the TM-ECU 13 determines in step S23 on the basis of a signal from outputted from the shift actuator that the up-shift operation is completed (YES in S23, at time T5 in Fig. 4), the control program shifts from step S23 to step S24. In a case where the TM-ECU 13 determines in step S23 that the up-shift operation is not competed (NO in S23), a processing of step S23 is repeated.

In step S24, the TM-ECU 13 drives the clutch actuator 29 to thereby gradually increase the transmissible torque to a torque value equivalent to a torque value in a fully engaged state of the clutch 2, as indicated by (f) of Fig. 4.

In step S25 simultaneously with step S24, the TM-ECU 13 outputs a control signal to the EG-ECU 12 to start the engine EG and to increase the rotational torque of the engine EG, as indicated by (g) of Fig. 4.

In step S26 simultaneously with steps S24 and S25, the TM-ECU 13 outputs a control signal to the MG-ECU 14 to thereby reduce the rotational torque of the motor generator MG, as indicated by (h) of Fig. 4. After steps S24, S25, and S26 end, the control program shifts to step S27.

In a case where the TM-ECU 13 determines in step S27 on the basis of a detection signal from the clutch actuator 29 that the clutch 2 is in the fully engaged state (YES in step S 27, at time T6 in Fig. 4), the control program shifts from step S27 to step S28. In a case where the TM-ECU 13 determines in step S27 that the clutch 2 is not in the fully engaged state (NO in step S28), a processing of step S27 is repeated.

In step S28, the TM-ECU 13 outputs to a shift completion signal to the HV-ECU 11, the EG-ECU 12, and the MG-ECU 14, thereby passing the authority for controlling the engine EG to the EG-ECU 12 and passing the authority for controlling the motor generator MG to the MG-ECU 14. After step S28 ends, the control program returns to step S11.

Next, a down-shift operation will be explained as follows with reference to the flowchart of Fig. 3 and the timeline chart of Fig. 5. In step S31, the TM-ECU 13 drives the clutch actuator 29 to gradually reduce the transmissible torque of the clutch 2 so as to reach zero after a predetermined time has elapsed (at a time elapsed from time T1 to time T2) as indicated by (a) of Fig. 5.

In step S32 simultaneously with step S31, the TM-ECU 13 outputs a control signal to the EG-ECU 12 to gradually reduce the rotational torque of the engine EG to thereby stop the engine EG after the predetermined time has elapsed (at the time elapsed from time T1 to time T2) as indicated by (b) of Fig. 5.

In step S33 simultaneously with steps S31 and S32, the TM-ECU 13 outputs a control signal to the MG-ECU 14 to thereby increase the rotational torque of the motor generator MG as indicated by (c) of Fig. 5. The rotational torque of the motor generator MG is controlled in consideration of the acceleration and deceleration of the vehicle so as to compensate for the aforementioned reduction of the rotational torque of the engine EG, which is to be inputted to the ring gear DF-1 of the differential mechanism DF. After steps S31, S32, and S33 end, the control program shifts to step S34.

In a case where the TM-ECU 13 determines in step S34 on the basis of a detection signal from the clutch actuator 29 that the transmissible torque has reached zero and the clutch 2 is in the disengaged state (YES in step S34, at time T2 in Fig. 5), the control program shifts from step S34 to step S35. In a case where the TM-ECU 13 determines in step S34 that the clutch 2 is not in the disengaged state, a processing of step S34 is repeated.

In step S35, the TM-ECU 13 drives the shift actuator of a presently established gear stage to move any one of the first, second, and third dog clutches 61a, 62a, and 63a of the presently established gear stage to the neutral position to bring all of the first, second, and third dog clutches 61a, 62a, and 63a into the neutral states, thereby bringing the transmission TM into the neutral state. After step S35 ends, the control program shifts from step S35 to step S36.

In a case where the TM-ECU 13 determines in step S36 on the basis of signals outputted from the shift actuators that all of the first, second, and third clutches 61a, 62a, and 63a are brought into the neutral states as indicated by (d) of Fig. 5 (YES in step S36, at time T3 in Fig. 5), the control program shifts from step S36 to step S37. In a case where the TM-ECU 13 determines in step S36 on the basis of signals outputted from the shift actuators that all of the first, second, and third clutches 61a, 62a, and 63a are not brought into the neutral states (NO in step S36), a processing of step S36 is repeated.

In step S37, the TM-ECU 13 drives the clutch actuator 29 to thereby increase the transmissible torque of the clutch 2 as indicated by (e) of Fig. 5. After step S37 ends, the control program shifts from step S37 to step S38.

In a case where the TM-ECU 13 determines in step S38 on the basis of a detection signal from the clutch actuator 29 that the transmissible torque of the clutch 2 has reached a reference value as indicated by (f) of Fig. 5 (YES in step S38, at time T4 in Fig. 5), the control program shifts from step S38 to step S39. In a case where the TM-ECU 13 determines in step S38 on the basis of a detection signal from the clutch actuator 29 that the transmissible torque of the clutch 2 has not reached the reference value (NO in step S38), a processing of step S38 is repeated.

In step S39, the TM-ECU 13 drives the clutch actuator 29 to thereby control the transmissible torque of the clutch 2 to be maintained in the reference value as indicated by (g) of Fig. 5, thereby bringing the clutch into the half-engaged state. Then, the TM-ECU 13 outputs a control signal to the EG-ECU 12 to start the engine EG and to gradually increase the rotational speed of the engine EG as indicated by (h) of Fig. 5. At this time, the clutch 2 is in the half-engaged state; therefore, as indicated by (i) of Fig. 5, the rotational speed of the input shaft 31 gradually increases in accordance with the increase of the rotational speed of the engine EG. After step S39 ends, the control program shifts from step S39 to step S40.

In a case where the TM-ECU 13 determines in step S40 on the basis of a detection signal from the input shaft rotational speed sensor 91 that the rotational speed of the input shaft 31 has reached a reference rotational speed (YES in step S40, at time T5 in Fig. 5), the control program shifts from step S40 to step S41. In a case where the TM-ECU 13 determines in step S40 that the rotational speed of the input shaft 31 has not reached the reference rotational speed (NO in step S40), a processing of step S40 is repeated. The reference rotational speed is greater by a predetermined rotational speed than a down-shift synchronizing rotational speed which will be described below.

In step S41, the TM-ECU 13 outputs a control signal to stop the engine EG to thereby stop controlling the rotational speed of the engine EG. After step S41 ends, the control program shifts from step S41 to step S42.

In a case where the TM-ECU 13 determines in step S42 on the basis of a detection signal of the input shaft rotational speed sensor 91 that the rotational speed of the input shaft 31 is reduced to be smaller than the down-shift synchronizing rotational speed (YES in step S42, at time T6 in Fig. 5), the control program shifts from step S42 to step S43. In a case where the TM-ECU 13 determines in step S42 that the rotational speed of the input shaft 31 is reduced but not below the down-shift synchronizing rotational speed (NO in step S42), a processing of step S42 is repeated. The down-shift synchronizing rotational speed corresponds to the rotational speed of the input shaft 31 in a state where a difference between the rotational speed of each idler gear 43, 44, 45 of a subsequent gear stage for a down-shift operation and the rotational speed of the input shaft 31 to which each idler gear 43, 44, 45 of the subsequent gear stage is rotatably connected or a difference between the rotational speed of the idler gear 52 of a subsequent gear stage for a down-shift operation and the rotational speed of the output shaft 32 to which the idler gear 52 of the subsequent gear stage is rotatably connected, is within a rotational speed tolerance having a predetermined range.

In step S43, the TM-ECU 13 drives the shift actuator for the subsequent gear stage in the down-shift operation, to move any one of the first, second, and third dog clutches 61a, 62a, and 63a of the presently established gear stage, thereby starting the down-shift operation for establishing the subsequent gear stage. After step S43 ends, the control program shifts from step S43 to step S44.

In a case where the TM-ECU 13 determines in step S44 on the basis of a signal outputted from the shift actuator that the down-shift operation is completed (YES in step S44, at time T7 in Fig. 5), the control program shifts from step S44 to step S45. In a case where the TM-ECU 13 determines in step S44 that the down-shift operation is not competed (NO in step S44), a processing of step S44 is repeated.

In step S45, the TM-ECU 13 drives the clutch actuator 29 to thereby start gradually increasing the transmissible torque to a torque value equivalent to the torque value in the fully engaged state of the clutch 2, as indicated by indicated by (j) of Fig. 5. After step S45 ends, the control program shifts from step S45 to step S46.

In step S46 simultaneously with step S45, the TM-ECU 13 outputs a control signal to the EG-ECU 12 to start the engine EG and to increase the rotational torque of the engine EG as indicated by (k) of Fig. 5.

In step S47 simultaneously with steps S45 and S46, the TM-ECU 13 outputs a control signal to the MG-ECU 14 to reduce the rotational torque of the motor generator MG as indicated by (I) of Fig. 5. After step S47 ends, the control program shifts from step S47 to step S48.

In a case where the TM-ECU 13 determines in step S48 on the basis of a detection signal from the clutch actuator 29 that the clutch 2 is in the fully engaged state (YES in step S48, at time T8 in Fig. 5), the control program shifts from step S48 to step S49. In a case where the TM-ECU 13 determines in step S48 that the clutch 2 is not in the fully engaged state (NO in step S48), a processing of step S48 is repeated.

In step S49, the TM-ECU 13 outputs to a shift completion signal to the HV-ECU 11, the EG-ECU 12, and the MG-ECU 14, thereby passing the authority for controlling the engine EG to the EG-ECU 12 and passing the authority for controlling the motor generator MG to the MG-ECU 14. After step S49 ends, the control program returns to step S11.

In addition, in the down-shift operation described above, it takes time (a time lag is generated) from the time the TM-ECU 13 outputs the control signal to start the engine EG and to gradually increase the rotational speed of the engine EG to the time the rotational speed of the engine EG actually increases. Therefore, right after the clutch 2 is disengaged (YES in S34), the TM-ECU 13 may output a control signal to the EG-ECU 12 to start the engine EG and to gradually increase the rotational speed of the engine EG.

As described above, the following effects may be obtained from the vehicle drive system 100 according to the embodiment of the disclosure. As clearly seen from the aforementioned explanation, in a case where an up-shift operation from a present gear stage to a subsequent gear stage is executed, the TM-ECU 13 (serving as the shift execution device) stops the engine EG to thereby reduce the rotational torque of the engine EG (refer to step S13 of Fig. 2 and (a) of Fig. 4). Thereafter, the TM-ECU 13 drives the shift actuator to disengage any one of the dog clutches 61a, 62a, and 63a, which is engaged with the idler gear of the present gear stage, from the idler gear (step S15 in Fig. 2). In other words, the rotational torque of the engine EG is reduced; thereby, an axial friction resistance between the idler gear and the dog clutch 61a, 62a, or 63a or a friction resistance between the dog clutch 61a and the output shaft 32 spline-fitted to the dog clutch 61a or between the dog clutch 62a or 63a and the input shaft 31 spline-fitted to the dog clutch 62a or 63a is reduced. As a result, the dog clutch 61a, 62a, or 63a may be moved in the axial direction relative to the output shaft 32 or the input shaft 31. In such condition where the dog clutch 61a, 62a, or 63a is movable in the axial direction relative to the output shaft 32 or the input shaft 31, the dog clutch 61a, 62a, or 63a is disengaged from the corresponding idler gear, thereby bringing the transmission TM (serving as the automatic transmission) into the neutral state. Thus, according to the vehicle drive system 100 of the embodiment, it is not necessary to bring the transmission TM into the neutral state after the clutch 2 is disengaged. Therefore, time for bringing the transmission TM into the neutral state may be reduced by time for disengaging the clutch 2. As a result, time for executing the up-shift operation may be reduced.

Additionally, according to the vehicle drive system 100 of the embodiment, the dog clutch 61a, 62a, or 63a is disengaged from the corresponding idler gear without disengaging the clutch 2; therefore, the TM-ECU 13 as the shift execution device may reduce the rotational speed of the input shaft 31 by reducing the rotational torque of the engine EG so that the rotational speed of the engine EG decreases. Consequently, a difference of the rotational speed of the idler gear of the subsequent gear stage and the rotational speed of the dog clutch 61a, 62a, or 63a corresponding to the idler gear of the subsequent gear stage may be reduced. As a result, the idler gear and the dog clutch 61a, 62a, or 63a are engaged with each other; thereby, the up-shift operation may be executed. In addition, a synchronization mechanism may be omitted in the vehicle drive system 100 of the embodiment. Thus, a mechanical loss caused by a sliding movement of the synchronization mechanism may be reduced. In addition, a high-power shift actuator for actuating the synchronization mechanism is not needed, resulting in a cost reduction of the vehicle drive system 100 and further leading to a weight reduction thereof. Thus, in the embodiment, the vehicle drive system 100 that may restrict the mechanical loss is obtained without cost or weight increase.

Further, according to the vehicle drive system 100 of the embodiment, in a case where the TM-ECU 13 as the shift execution device executes the up-shift operation, the TM-ECU 13 executes a fuel cut processing relative to the engine EG in step S13 of Fig. 2 to thereby drastically reduce the rotational torque of the engine EG as indicated by (a) in Fig. 4. At this time, in step S14, the TM-ECU 13 increases the rotational torque of the motor generator MG as indicated by (b) in Fig. 4. As a result, the vehicle may be avoided or restricted from decelerating because of the reduction of the rotational torque of the engine EG and deterioration of the operationability of the vehicle drive system 100 may be avoided.

Furthermore, according to the vehicle drive system 100 of the embodiment, when the rotational speed of the input shaft 31 is reduced to the synchronizing rotational speed after the clutch 2 is disengaged (YES in step S21 of Fig. 2), the TM-ECU 13 drives the shift actuator to thereby connect the idler gear of a subsequent gear stage to the input shaft 31 or the output shaft 32 so that the idler gear rotates with the input shaft 31 or the output shaft 32 (in step S22). The synchronizing rotational speed corresponds to the rotational speed of the input shaft 31 in a state where a difference between the rotational speed of the idler gear of the subsequent gear stage and the rotational speed of the input shaft 31 or the output shaft 32 at which the idler gear is arranged, is within the rotational speed tolerance having the predetermine range. The idler gear of the subsequent gear stage is connected to the input shaft 31 or the output shaft 32 so as to rotate therewith as described above; therefore, the idler gear of the subsequent gear stage is engaged with the corresponding dog clutch 61a, 62a, or 63a in a manner to be substantially synchronized with the dog clutch 61a, 62a, or 63a. Accordingly, the idler gear of the subsequent gear stage may be surely rotatably connected to the input shaft 31 or the output shaft 32 at which the idler gear is arranged. Consequently, the up-shift operation may be surely executed. In addition, when the idler gear is engaged with the corresponding dog clutch 61a, 62a, or 63a, a shock is generated due to a difference between the rotational speeds of the idler gear and the corresponding dog clutch 61a, 62a, or 63a; however, such shock may be reduced in the vehicle drive system 100 of the embodiment. As a result, a shift shock or abnormal noises generated at the vehicle drive system 100 by the up-shift operation may be reduced.

Moreover, according to the vehicle drive system 100 of the embodiment, the TM-ECU 13 disconnects the idler gear of a present gear stage from the input shaft 31 or the output shaft 32 at which the idler gear of the present gear stage is arranged, thereby bringing the transmission TM into the neutral state (YES in step S16 of Fig. 2). Afterward, in step S17, the TM-ECU 13 reduces the transmissible torque of the clutch 2 to the reference transmissible torque which is smaller than a torque value in the fully engaged state of the clutch 2 and which is greater than zero as indicated (d) of Fig. 4. In such case, time for disengaging the clutch 2 may be short compared to that of a case where the clutch 2 is disengaged from the fully engaged state. Accordingly, for example in a case where the idler gear of a subsequent gear stage is rotationally connected to a shaft (the output shaft 32 or the input shaft 31) at which the idler gear of the subsequent gear stage is arranged, the rotational speed of the input shaft 31 is restricted from being reduced to be significantly below the synchronizing rotational speed. Consequently, the idler gear of the subsequent gear stage may be surely rotatably connected to the shaft at which the idler gear of the subsequent gear stage is arranged. In addition, when the idler gear is engaged with the corresponding dog clutch 61a, 62a, or 63a, a shock is generated due to a difference between the rotational speeds of the idler gear and the corresponding dog clutch 61a, 62a, or 63a; however, such shock may be minimized in the vehicle drive system 100 of the embodiment. As a result, a shift shock or abnormal noises generated at the vehicle drive system 100 by the up-shift operation may be reduced.

Additionally, according to the vehicle drive system 100 of the embodiment, the TM-ECU 13 stops the engine EG to thereby reduce the rotational torque of the engine EG (in step S13 of Fig. 2). Therefore, the rotational torque of the engine EG may be promptly reduced by the friction torque acting in a negative direction as indicated by (a) in Fig. 4. Accordingly, the dog clutch 61a, 62a, or 63a may be promptly brought into a state of being movable in the axial direction of the shaft (the output shaft 32 or the input shaft 31) at which the dog clutch 61a, 62a, or 63a is arranged and may be quickly disengaged from the idler gear. In addition, the rotational speed of the input shaft 31 is promptly reduced; thereby, the idler gear of a subsequent gear stage may be synchronized with the dog clutch 61a, 62a, or 63a corresponding to the idler gear of the subsequent gear. As a result, a state where an up-shift operation is executable may be obtained and time for the up-shift operation may be reduced.

In the aforementioned embodiment, the vehicle drive system 100 applied to the hybrid vehicle provided with the motor generator MG is explained. Alternatively, the vehicle drive system 100 according to the embodiment may be applied to a vehicle provided with a motor which does not include a power generation function. Furthermore, the vehicle drive system 100 according to the embodiment may be applied to a vehicle which is not provided with the motor generator MG or a motor and which is driven only by the rotational torque of the engine EG.

Further, in the vehicle drive system 100 according to the aforementioned embodiment, the TM-ECU 13 stops the engine EG in step S13 of Fig. 2. Alternatively, the vehicle drive system 100 according to the embodiment may be applied to a modified embodiment in which the TM-ECU 13 reduces the rotational torque of the engine EG so as to decrease the rotational speed thereof without stopping the engine EG. In such modified embodiment, pressure between the engagement portions of each of the first, second, and third dog clutches 61a, 62a, and 63a and the engaged portions of the idler gear corresponding to each of the first, second, and third dog clutches 61a, 62a, and 63a is decreased and thus one of the first, second, and third dog clutches 61a, 62a, and 63a is moved in the axial direction relative to the output shaft 32 or the input shaft 31. Therefore, the transmission TM may be brought into the neutral state. Even in the modified embodiment, the rotational speed of the engine EG decreases and thus the rotational speed of the input shaft 31 decreases in accordance with the decrease of the rotational speed of the engine EG. Consequently, a difference of the rotational speed of the idler gear of a subsequent gear stage and the rotational speed of the dog clutches 61a, 62a, or 63a corresponding to the idler gear of the subsequent gear stage may be reduced. As a result, the idler gear is engaged with the corresponding dog clutch 61a, 62a, or 63a; thereby, an up-shift operation may be executed.

Furthermore, in the vehicle drive system 100 according to the aforementioned embodiment, in step S13 illustrated in Fig. 2, the TM-ECU 13 stops the fuel injection in the fuel injection device EG-2 to thereby stop the engine EG. Alternatively, the TM-ECU 13 may stop ignition in an ignition device of the engine EG to thereby stop the engine EG.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges

## Claims

1. A vehicle drive system (100), comprising:
an engine (EG) outputting a rotational torque;
a drive shaft (EG-1) to which the rotational torque of the engine (EG) is transmitted;
a dog-clutch automatic transmission (TM) comprising:
an input shaft (31);
an output shaft (32) arranged in parallel with the input shaft (31) and rotatably connecting to a driving wheel (Wl, Wr);
plural idler gears (43, 44, 45, 51, 52) idly rotatably arranged at one of the input shaft (31) and the output shaft (32);
plural fixed gears (41, 42, 53, 54, 55) fixed to the other of the input shaft (31) and the output shaft (32) so as not to rotate relative to the other of the input shaft (31) and the output shaft (32), the plural fixed gears (41, 42, 53, 54, 55) being engageable with the plural idler gears (43, 44, 45, 51, 52), respectively;
plural dog clutches (61a, 62a, 63a) provided at a shaft (31, 32) at which the plural idler gears (43, 44, 45, 51, 52) are arranged, and positioned side by side with the plural idler gears (43, 44, 45, 51, 52) so as not to rotate relative to the shaft (31, 32) and so as to move in an axial direction of the shaft (31, 32), each of the plural dog clutches (61a, 62a, 63a) being engaged with each of the plural idler gears (43, 44, 45, 51, 52) in a non relatively rotatable state to connect the idler gear (43, 44, 45, 51, 52) to the shaft (31, 32) so that the idler gear (43, 44, 45, 51, 52) is not relatively rotatable to the shaft (31, 32); and
a selection mechanism (61, 62, 63) moving the dog clutch (61a, 62a, 63a) in the axial direction to allow the dog clutch (61a, 62a, 63a) to be engaged with the corresponding idler gear (43, 44, 45, 51, 52) in a non relatively rotatable state, the selection mechanism (61, 62, 63) moving the dog clutch (61a, 62a, 63a) in the axial direction to allow the dog clutch (61a, 62a, 63a) to be disengaged from the corresponding idler gear (43, 44, 45, 51, 52) in a relatively rotatable state;
a clutch (2) arranged between the drive shaft (EG-1) and the input shaft (31) to connect and disconnect between the drive shaft (EG-1) and the input shaft (31); and
a shift execution device (13) configured to execute an up-shift operation from a present gear stage to a subsequent gear stage by reducing the rotational torque of the engine (EG), driving the selection mechanism (61, 62, 63) to disengage the dog clutch (61a, 62a, 63a), which is engaged with the idler gear (43, 44, 45, 51, 52) of the present gear stage, from the idler gear (43, 44, 45, 51, 52) of the present gear stage, and disengaging the clutch (2) after a predetermined time has elapsed, and by driving the selection mechanism (61, 62, 63) to engage the dog clutch (61a, 62a, 63a), which is to be engaged with the idler gear (43, 44, 45, 51, 52) of the subsequent gear stage, with the idler gear (43, 44, 45, 51, 52) of the subsequent gear stage, to connect the idler gear (43, 44, 45, 51, 52) of the subsequent gear stage to the shaft (31, 32) so that the idler gear (43, 44, 45, 51, 52) of the subsequent gear stage rotates along with the shaft (31, 32) at which the idler gear (43, 44, 45, 51, 52) of the subsequent gear stage is arranged, and engaging the clutch (2).

2. The vehicle drive system (100) according to Claim 1, further comprising a motor (MG) rotatably connecting to the drive shaft (EG-1) to output a rotational torque to the driving wheel (WI, Wr), wherein in a case of executing the up-shift operation from the present gear stage to the subsequent gear stage, the shift execution device (13) increases the rotational torque of the motor (MG) when reducing the rotational torque of the engine (EG).

3. The vehicle drive system (100) according to Claim 1 or 2, wherein in a case where a rotational speed of the input shaft (31) is decreased to a synchronizing rotational speed after the clutch (2) is disengaged, the shift execution device (13) drives the selection mechanism (61, 62, 63) to connect the idler gear (43, 44, 45, 51, 52) of the subsequent gear stage so that the idler gear (43, 44, 45, 51, 52) of the subsequent gear stage rotates along with the shaft (31, 32), the synchronizing rotational speed corresponding to the rotational speed of the input shaft (31) in a state where a difference between a rotational speed of the idler gear (43, 44, 45, 51, 52) of the subsequent gear stage and a rotational speed of the shaft (31, 32) at which the idler gear (43, 44, 45, 51, 52) of the subsequent gear stage is arranged, is within a rotational speed tolerance including a predetermine range.

4. The vehicle drive system (100) according to any one of Claims 1 to 3, wherein after the shift execution device (13) disconnects the idler gear (43, 44, 45, 51, 52) of the present gear stage from the shaft (31, 32) at which the idler gear (43, 44, 45, 51, 52) of the present gear stage is arranged, the shift execution device (13) reduces a transmissible torque of the clutch (2) to a reference transmissible torque which is smaller than a torque value in a fully engaged state of the clutch (2) and which is greater than zero, and
wherein in a case where the rotational speed of the input shaft (31) is decreased to a reference rotational speed which is greater by a predetermined rotational speed than the synchronizing rotational speed, the shift execution device (13) disengages the clutch (2).

5. The vehicle drive system (100) according to one of Claims 1 to 4, wherein the shift execution device (13) reduces the rotational torque of the engine (EG) by cutting fuel to the engine (EG).

6. A vehicle drive system (100), comprising:
a dog-clutch automatic transmission (TM) comprising:
an input shaft (31) to which a rotational torque from an engine (EG) is transmitted via a drive shaft (EG-1);
an output shaft (32) rotatably connecting to a driving wheel (Wl, Wr);
an idler gear (43, 44, 45, 51, 52) idly rotatably arranged at one of the input shaft (31) and the output shaft (32);
a fixed gear (41, 42, 53, 54, 55) arranged at the other of the input shaft (31) and the output shaft (32) and provided to be engageable with the idler gear (43, 44, 45, 51, 52);
a dog clutch (61a, 62a, 63a) being moved to allow the idler gear (43, 44, 45, 51, 52) and the fixed gear (41, 42, 53, 54, 55) to be engaged and disengaged with respect to each other; and
a selection mechanism (61, 62, 63) moving the dog clutch (61a, 62a, 63a) to shift gear stages;
a clutch (2) arranged between the drive shaft (EG-1) and the input shaft (31) to connect and disconnect between the drive shaft (EG-1) and the input shaft (31); and
a shift execution device (13) configured to execute a down-shift operation from a present gear stage to a subsequent gear stage by reducing the rotational torque of the engine (EG), driving the selection mechanism (61, 62, 63) to allow the dog clutch (61a, 62a, 63a) to be disengaged from the idler gear (43, 44, 45, 51, 52) of the present gear stage, and disengaging the clutch (2), and by driving the selection mechanism (61, 62, 63) to move the dog clutch (61a, 62a, 63a) to allow the dog clutch (61a, 62a, 63a) to be engaged with the idler gear (43, 44, 45, 51, 52) of the subsequent gear stage, and engaging the clutch (2).

7. The vehicle drive system (100) according to Claim 6, further comprising a motor (MG) rotatably connecting to the drive shaft (EG-1) to output a rotational torque to the driving wheel (WI, Wr), wherein in a case of executing the down-shift operation from the present gear stage to the subsequent gear stage, the shift execution device (13) reduces the rotational torque of the engine (EG) and increases the rotational torque of the motor (MG), and disengages the clutch (2) after bringing the clutch (2) into a half-engaged state.

8. The vehicle drive system (100) according to Claim 6 or 7, wherein after the shift execution device (13) brings the dog clutch (61a, 62a, 63a) into a neutral state, the shift execution device (13) increases a transmissible torque of the clutch (2), and starts an engine rotational speed control when an actual transmissible torque has reached a reference value.

9. The vehicle drive system (100) according to one of Claims 6 to 8, further comprising an input shaft rotational speed sensor (91) for detecting a rotational speed of the input shaft (31), wherein in a case where the rotational speed of the input shaft (31) has reached a reference rotational speed, the shift execution device (13) ends the engine rotational speed control and drives the selection mechanism (61, 62, 63) to move the dog clutch (61a, 62a, 63a) to start downshifting.
